# EUROPÄISCHE PATENTSCHRIFT

(11) **EP 3 652 852 B1**
(45) Veröffentlichungstag und Bekanntmachung des Hinweises auf die Patenterteilung: **10.01.2024**
(21) Anmeldenummer: 18785883.2
(22) Anmeldetag: 02.10.2018
(51) Int. Cl.: H02M 7/539, H02P 29/50

(54) **ANTRIEBSEINRICHTUNG BZW. DEREN BETRIEB**
INVERTER DEVICE AND ITS OPERATION
DISPOSITIF D'ONDULEUR ET SON FONCTIONNEMENT

(30) Priorität: 09.10.2017 DE 102017217948
(43) Veröffentlichungstag der Anmeldung: 20.05.2020
(73) Patentinhaber: Siemens Energy Global GmbH & Co. KG, 81739 München (DE)
(72) Erfinder: STACH, Tilo, 91080 Uttenreuth (DE); TÖLLE, Hans-Jürgen, 90419 Nürnberg (DE)
(86) Internationale Anmeldenummer: PCT/EP2018/076762
(87) Internationale Veröffentlichungsnummer: WO 2019/072634

(56) Entgegenhaltungen:
- DE-A1-102012 201 269
- DE-A1-102013 220 502
- US-A1- 2003 218 449
- US-A1- 2006 043 922

## Beschreibung

Die Erfindung betrifft eine Antriebseinrichtung bzw. deren Betrieb, insbesondere bei einem Wasserfahrzeug, wie einem Schiff oder Unterseeboot.

Antriebseinrichtungen sind beispielsweise aus der EP 2 683 605 B1 oder der EP 0 178 446 B1 bekannt. DE 10 2012 201 269 A1 betrifft beispielsweise eine Schaltungsanordnung und ein Verfahren zur wahlweisen Steuerung eines Wechselstrommotors oder eines Gleichstrommotors sowie eine Verwendung des Verfahrens in einem Unterseeboot.

Eine Aufgabe der Erfindung ist es eine derartige Antriebseinrichtung zu verbessern.

Eine Lösung der Aufgabe ergibt sich bei einer Antriebseinrichtung nach Anspruch 1 bzw. bei einem Verfahren nach Anspruch 9. Ausgestaltungen ergeben sich insbesondere nach den Ansprüchen 2 bis 8 bzw. nach Anspruch 10 oder 11.

Eine Antriebseinrichtung weist eine erste Halbbrücke mit einem ersten Phasenanschluss, eine zweite Halbbrücke mit einem zweiten Phasenanschluss, eine dritten Halbbrücke mit einem dritten Phasenanschluss und eine vierte Halbbrücke mit einem vierten Phasenanschluss auf, wobei der erste Phasenanschluss mit dem zweiten Phasenanschluss über eine erste stromkompensierte Drossel verbunden ist, welche einen ersten motorwicklungsseitigen Anschluss aufweist, wobei der dritte Phasenanschluss mit dem vierten Phasenanschluss über eine zweite stromkompensierte Drossel verbunden ist, welche einen zweiten motorwicklungsseitigen Anschluss aufweist.

Durch die Vielzahl der Halbleiterbrücken für einen Wicklungsstrang und die Verwendung von Saugdrosseln (stromkompensierte Drossel) lässt sich eine geringere Geräuschentwicklung durch eine derart bestromte elektrische Maschine erreichen.

Die Antriebseinrichtung wird beispielsweise bei einem U-Boot verwendet. Ein U-Boot-Propulsionsantriebssystem weist beispielsweise eine elektrischen Maschine mit einem permanentmagnetisch erregten Läufer und mit einem Ständer auf, in dem eine Ständerwicklung angeordnet ist, die eine Vielzahl von Wicklungssträngen aufweist, wobei für jeden der Wicklungsstränge jeweils ein separater Umrichter zur Speisung des Wicklungsstranges mit elektrischen Strom vorhanden ist, und wobei die Umrichter zur Speisung der Wicklungsstränge im Inneren der elektrischen Maschine angeordnet sind. Eine Aufgabe ist es z.B. den Wirkungsgrad zu erhöhen und/oder die durch Strom- Oberschwingungen des Wechselrichters hervorgerufenen Geräuschemissionen zu reduzieren. Für den U-Boot Propulsionsantrieb gelten hohe Anforderungen hinsichtlich des Wirkungsgrades und einer möglichst geringen Geräuschemission. Diese hohen Anforderungen können durch eine Strangzahlumschaltung der Motorwicklungen erfüllt werden. Der Motor weist zwei z.B. identische Wicklungssysteme auf. Jedes Wicklungssystem hat z.B. 12 Stränge und 6 Wechselrichtermodule, wobei jedes Wechselrichtermodul zwei Wicklungen (Stränge) speisen kann. Um den Wirkungsgrad des Motors im unteren Teillastbereich zu erhöhen, wird die induzierte Motorspannung durch Reihenschaltung von je zwei zu einem Wechselrichter gehörenden Wicklungssträngen des jeweiligen Systems unter einer bestimmten Drehzahl erhöht. Dabei werden die Wechselrichter halbseitig deaktiviert. Übersteigt die Motordrehzahl einen bestimmten Wert, wird die Reihenschaltung aufgelöst und die Wechselrichter vollständig aktiviert. Jede der Wicklungen wird wieder aus einem eigenen Wechselrichter gespeist (H-Brücke). Man unterscheidet also den Motordrehzahlbereich in 6-strängigen und 12-strängigen Betrieb. Da gerade im unteren Drehzahlbereich (6-strängiger Betrieb aus Reihenschaltung von zwei Motorwicklungen) hinsichtlich Geräuschemissionen strenge Grenzwerte gelten, werden zur Reduzierung der durch die Taktfrequenz der Wechselrichter verursachten Oberschwingungen des Stromes, zusätzliche Drosseln mit hoher Induktivität in die Reihenschaltung eingebracht. Bei der Auswahl der Drosseln wird ein bestmöglicher Kompromiss aus Strombelastbarkeit und Bauvolumen gewählt, um die Wechselrichtermodule so kompakt wie möglich zu halten. In einer Ausführung der Wechselrichtermodule definieren diese Drosseln und deren maximale Strombelastbarkeit den Umschaltpunkt zwischen 6- und 12-strängigem Betrieb. Die Strangumschaltung erfolgt durch ein Koppelschütz. Vor der Umschaltung wird der Strangstrom auf x A reduziert, um einerseits die Schaltbelastung und damit das Bauvolumen des Koppelschützes, und andererseits die Möglichkeit der Entstehung von Lichtbögen während des Schaltvorganges zu minimieren. Ein verändertes Wechselrichterkonzept erfüllt auch die hohen Anforderungen an den Wirkungsgrad sowie die der Geräuschemission und verbessert die genannten Kriterien gegenüber einem anderen Wechselrichterkonzept. Mit dem veränderten Wechselrichterkonzept ist es möglich, den Drehzahlbereich, in dem strengeren Geräuschgrenzen gelten, zu höheren Drehzahlen hin, zu erweitern. Dabei kann im Umschaltpunkt auf ein Koppelschütz und eine Stromreduzierung verzichtet werden. Ferner ist es für eine Reduzierung der Oberschwingungen im Teillastbereich nicht notwendig, zusätzliche Drosseln in die Reihenschaltung aus zwei Motorwicklungen einzubringen. Die Höhe der im Motor entstehenden Geräuschemissionen ist hauptsächlich von der Höhe des durch die Taktfrequenz erzeugten Rippelstromes abhängig. Je höher die Taktfrequenz, desto kleiner der maximale Rippelstrom und damit einhergehend auch die Anregung von mechanischen Motorelementen. Sind Wege gefunden, die Taktfrequenz in der Motorwicklung zu erhöhen, ohne dabei den durch Schalt- und Durchlassverluste beeinflussten Wirkungsgrad des Wechselrichters außer Acht zu lassen, so ist diese von Vorteil.

Die Antriebseinrichtung weist eine erste Motorwicklung eines Motors auf, wobei die erste Motorwicklung ein erstes Motorwicklungsende aufweist und ein zweites Motorwicklungsende aufweist. Der Motor ist beispielsweisen eine Synchronmaschine oder eine Asynchronmaschine. Die Synchronmaschine kann permanenterregt sein oder fremderregt. Der erste motorwicklungsseitige Anschluss ist mit dem ersten Motorwicklungsende verbunden und der zweite motorwicklungsseitige Anschluss ist mit dem zweiten Motorwicklungsende verbunden.

In einer Ausgestaltung der Antriebseinrichtung weist diese eine fünfte Halbbrücke mit einem fünften Phasenanschluss, eine sechste Halbbrücke mit einem sechsten Phasenanschluss, eine siebte Halbbrücke mit einem siebten Phasenanschluss und eine achte Halbbrücke mit einem achten Phasenanschluss auf, wobei der fünfte Phasenanschluss mit dem sechsten Phasenanschluss über eine dritte stromkompensierte Drossel verbunden ist, welche einen dritten motorwicklungsseitigen Anschluss aufweist, wobei der siebte Phasenanschluss mit dem achten Phasenanschluss über eine vierte stromkompensierte Drossel verbunden ist, welche einen vierten motorwicklungsseitigen Anschluss aufweist.

In einer Ausgestaltung der Antriebseinrichtung weist eine fünfte stromkompensierte Drossel einen fünften motorwicklungsseitigen Anschluss auf, wobei eine sechste stromkompensierte Drossel einen sechsten motorwicklungsseitigen Anschluss aufweist, wobei der erste motorwicklungsseitige Anschluss und der dritte motorwicklungsseitige Anschluss mit der fünften stromkompensierten Drossel stromrichterseitig verbunden ist, wobei der zweite motorwicklungsseitige Anschluss und der vierte motorwicklungsseitige Anschluss mit der sechsten stromkompensierten Drossel stromrichterseitig verbunden ist, wobei der fünfte motorwicklungsseitige Anschluss mit dem ersten Motorwicklungsende verbunden ist und der sechste motorwicklungsseitigen Anschluss mit dem zweiten Motorwicklungsende verbunden ist.

Die Antriebseinrichtung weist eine achte Halbbrücke für eine direkte Verbindung mit einem ersten Motorwicklungsende einer ersten Motorwicklung und eine neunte Halbbrücke für eine direkte Verbindung mit einem zweiten Motorwicklungsende der ersten Motorwicklung auf.

In einer Ausgestaltung der Antriebseinrichtung weist ein Motor eine Vielzahl von Motorwicklungen auf, wobei eine Vielzahl von Motorwicklungen jeweils über zumindest eine stromkompensierte Drossel mit Halbbrücken, insbesondere H-Brücken, verbunden ist, wobei diese jeweilige Motorwicklung auch mit einer achten und neunte Halbbrücke verbunden ist, wobei die achte und neunte Halbbrücke drosselfrei direkt mit die-ser jeweiligen Motorwicklung verbunden ist.

In einer Ausgestaltung der Antriebseinrichtung bilden zwei Halbbrücken ein Wechselrichtermodul aus.

Nach einem Verfahren zum Betrieb einer Antriebseinrichtung weist diese eine Vielzahl von Wechselrichtermodulen auf, wobei eine Vielzahl der Wechselrichtermodule jeweils eine Vielzahl von Halbbrücken aufweist, wobei die Halbbrücken innerhalb einer Halbwelle versetzt angesteuert werden, wobei für einen ersten Leistungsbereich einer elektrischen Maschine mit Motorwicklungen Halbbrücken aktiv sind, welche über eine stromkompensierte Drossel mit der elektrischen Maschine verbunden sind und in einem zweiten Leistungsbereich, welcher größer ist als der erste Leistungsbereich, Halbbrücken aktiv sind, welche drosselfrei mit der elektrischen Maschine verbunden sind.

Die Erfindung wird nachfolgend exemplarisch durch Ausführungsbeispiele näher erläutert. Gleiche Elemente weisen dabei die gleichen Bezugszeichen auf. Dabei zeigt:
- FIG 1: eine erste Schaltung;
- FIG 2: eine Saugdrossel (stromkompensierte Drossel);
- FIG 3: einen Rippelstrom;
- FIG 4: ein U-Boot und
- FIG 5: eine zweite Schaltung.

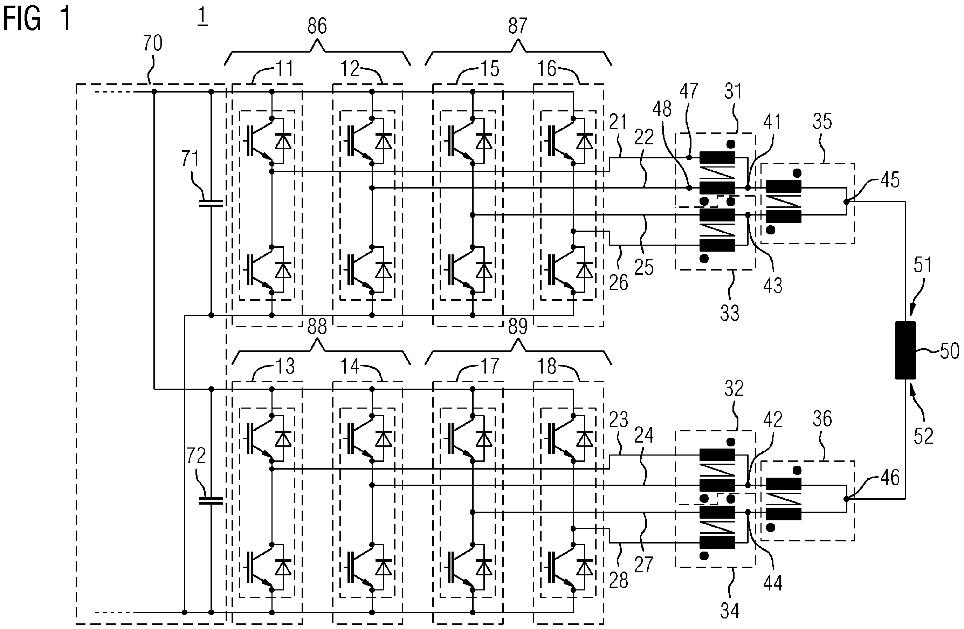

Die Darstellung nach FIG 1 zeigt eine Antriebseinrichtung 1 mit einer ersten Halbbrücke 11 mit einem ersten Phasenanschluss 21, einer zweiten Halbbrücke 12 mit einem zweiten Phasenanschluss 22, einer dritten Halbbrücke 13 mit einem dritten Phasenanschluss 23 und einer vierten Halbbrücke 14 mit einem vierten Phasenanschluss 24, wobei der erste Phasenanschluss 21 mit dem zweiten Phasenanschluss 22 über eine erste stromkompensierte Drossel 31 verbunden ist, welche einen ersten motorwicklungsseitigen Anschluss 41 aufweist, wobei der dritte Phasenanschluss 23 mit dem vierten Phasenanschluss 24 über eine zweite stromkompensierte Drossel 32 verbunden ist, welche einen zweiten motorwicklungsseitigen Anschluss 42 aufweist. Die Antriebseinrichtung 1 weist ferner eine fünfte Halbbrücke 15 mit einem fünften Phasenanschluss 25, eine sechste Halbbrücke 16 mit einem sechsten Phasenanschluss 26, eine siebte Halbbrücke 17 mit einem siebten Phasenanschluss 27 und eine achten Halbbrücke 18 mit einem achten Phasenanschluss 28 auf, wobei der fünfte Phasenanschluss 25 mit dem sechsten Phasenanschluss 26 über eine dritte stromkompensierte Drossel 33 verbunden ist, welche einen dritten motorwicklungsseitigen Anschluss 43 aufweist, wobei der siebte Phasenanschluss 27 mit dem achten Phasenanschluss 28 über eine vierte stromkompensierte Drossel 34 verbunden ist, welche einen vierten motorwicklungsseitigen Anschluss 44 aufweist. Dabei weist eine fünfte stromkompensierte Drossel 35 einen fünften motorwicklungsseitigen Anschluss 45 aufweist, wobei eine sechste stromkompensierte Drossel 36 einen sechsten motorwicklungsseitigen Anschluss 46 aufweist, wobei der erste motorwicklungsseitige Anschluss 41 und der dritte motorwicklungsseitige Anschluss 43 mit der fünften stromkompensierten Drossel 35 stromrichterseitig verbunden ist, wobei der zweite motorwicklungsseitige Anschluss 42 und der vierte motorwicklungsseitige Anschluss 44 mit der sechsten stromkompensierten Drossel 36 stromrichterseitig verbunden ist. Die Antriebseinrichtung 1 weist eine erste Motorwicklung 50 auf, wobei die erste Motorwicklung 50 ein erstes Motorwicklungsende 51 aufweist und ein zweites Motorwicklungsende 52 aufweist, wobei der fünfte motorwicklungsseitige Anschluss 45 mit dem ersten Motorwicklungsende 51 verbunden ist und der sechste motorwicklungsseitigen Anschluss 46 mit dem zweiten Motorwicklungsende 52 verbunden ist.

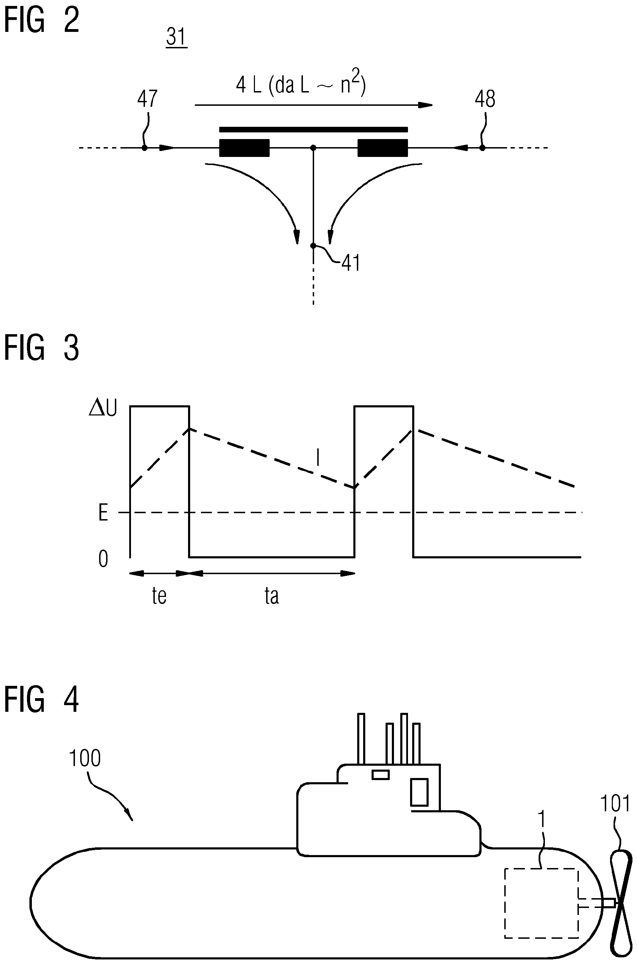

Nach FIG 1 ist eine Prinzipschaltung zur Erhöhung der Taktfrequenz dargestellt. Die zwei von der Batteriespannung gespeisten Wechselrichter bestehen aus jeweils zwei H-Brücken, die über stromkompensierte Drosseln parallelgeschaltet werden. Die beiden Mittelpunkte der Drosseln werden erneut über eine stromkompensierte Drossel parallelgeschaltet. Die gemeinsamen aus den Parallelschaltungen resultierenden Mittelpunkte beider Wechselrichter werden an jeweils ein Ende der Motorwicklung angeschlossen. Mit jeder Parallelschaltung verdoppelt sich die am Wechselrichterausgang resultierende Taktfrequenz. Die in der Motorwicklung auftretende Taktfrequenz ist durch die Parallelschaltung von zwei derartigen Wechselrichtern somit achtmal so groß wie die eines einzelnen Halbleiterelementes. Weiterhin können die Stufen der Ausgangsspannung achtmal feiner gewählt werden. Das bedeutet, es ergibt sich ein achtmal kleinerer Spannungshub für die Berechnung des maximalen Stromrippels (siehe Figur 2). Nach der Formel ΔIₘₐₓ=ΔU/(4f_{T}L), (mit f_{T}: Taktfrequenz) reduziert sich damit der maximale Rippelstrom um den Faktor 64. Es ist auch möglich, den Wirkungsgrad durch eine Reduzierung von Halbleitern und Drosseln zu erhöhen. Sollten beispielsweise nur die Hälfte, also lediglich zwei H-Brücken, und dem Prinzip der Parallelschaltung entsprechend nur zwei stromkompensierte Drosseln zum Einsatz kommen, würde sich der Rippelstrom um den Faktor 16 verringern. Es ist also für die Wahl der Anzahl von H-Brücken ein Kompromiss zwischen Wirkungsgrad und maximalem Stromrippel zu schließen (insbesondere eine Geräuschemission gefunden, und die Parallelschaltung entsprechend kaskadiert werden). Eine weitere Verbesserung des Wirkungsgrades kann durch den Einsatz von SiC-Halbleitern für die H-Brücken erreicht werden.

Die Antriebseinrichtung weist insbesondere eine Vielzahl von Motorwicklungen aufweist, wobei eine Vielzahl von Motorwicklungen jeweils über zumindest eine stromkompensierte Drossel mit Halbbrücken 11,12,13,14,15,16,17,18, insbesondere H-Brücken 86,87,88,89, verbunden sind, wobei diese jeweilige Motorwicklung auch mit einer jeweiligen achten und neunte Halbbrücke verbunden ist, wobei die achte und neunte Halbbrücke (81,82) insbesondere drosselfrei mit dieser jeweiligen Motorwicklung 50 verbunden ist.

Die Darstellung nach FIG 2 zeigt eine Stromaufteilung einer Saugdrossel 31. Links wie auch rechts ist beispielsweise ein Strom von 75 gegeben, was in einem Strom von 150A im Punkt 41 resultiert. Da die Ströme in den Schenkeln der Drosseln entgegengesetzte, sich gegenseitig aufhebende Magnetfelder erzeugen, wird der Kern durch den Laststrom resultierend nicht (bzw. praktisch nicht) magnetisiert, so dass er relativ klein dimensioniert werden kann. Es ist bei der Auslegung der Drosseln darauf zu achten, dass die Längsinduktivität zwischen zwei Wechselrichtern groß genug ist, den Querstrom von einem zum anderen Wechselrichter ausreichend zu begrenzen. Es ist ferner möglich diesen Querstrom durch Eingriffe in die Pulserzeugung auf ein Minimum zu regeln, um eine Sättigung des Drosselkerns zu verhindern. Die Wicklungen der Drosseln sind so zu dimensionieren, dass diese den Laststrom tragen können.

Der Betrag des Stromes durch die Motorwicklung wird durch den jeweiligen Aussteuergrad der Wechselrichter bestimmt, wobei der Wechselrichter- Ausgangsstrom immer gleich der Summe aller Ströme durch die Drosselwicklungen ist.

Die Darstellung nach FIG 3 zeigt einen Rippelstrom. Der Betrag des Stromes durch die Motorwicklung wird durch den jeweiligen Aussteuergrad der Wechselrichter bestimmt, wobei der Wechselrichter-Ausgangsstrom immer gleich der Summe aller Ströme durch die Drosselwicklungen ist.

Die Darstellung nach FIG 4 zeigt ein U-Boot 100, wobei mittels der Antriebseinrichtung 1 ein Propeller 101 antreibbar ist.

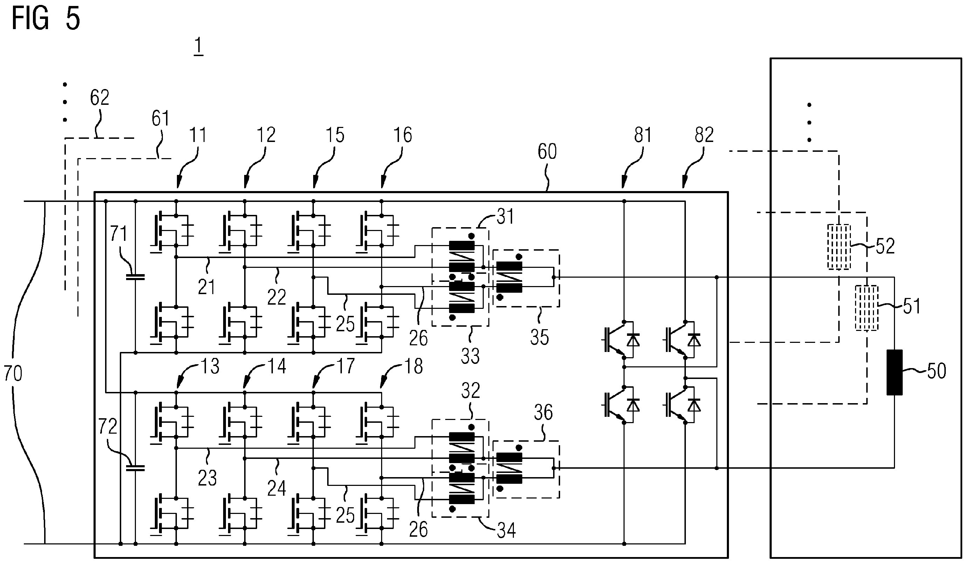

Die Darstellung nach FIG 5 zeigt eine Antriebseinrichtung 1, welche auf der von FIG 1 basiert. Die Antriebseinrichtung 1 weist zusätzlich eine achte Halbbrücke für eine direkte Verbindung mit einem ersten Motorwicklungsende 51 einer ersten Motorwicklung 50 und eine neunte Halbbrücke 82 für eine direkte Verbindung mit einem zweiten Motorwicklungsende 51 der ersten Motorwicklung 50 auf. Die Halbbrücken sind an einem Gleichspannungszwischenkreis 70 angeschlossen. Der Gleichspannungszwischenkreis 70 weist Zwischenkreiskondensatoren 71 und 72 auf. Die elektrische Maschine weist eine Vielzahl von Motorwicklungen 50, 51, 52, etc. auf, wobei für jede Motorwicklung ein Stromrichtermodul 60 vorgesehen ist. Die Antriebseinrichtung weist also eine Vielzahl von Stromrichtermodulen 60, 61, 62, etc. auf.

Für die 2*4 Halbbrücken können z.B. 50A SiC Module verwendet werden.

In einer Ausgestaltung kann zusätzlich eine weitere Wechselrichter H-Brücke parallel zum Ausgang geschaltet sein.

Da es bei großen Leistungen ggf. keine strengen Geräuschanforderungen gibt, kann man die gesamte Baugröße der Saugdrosseln klein halten, indem zusätzlich eine weitere H-Brücke parallel zum Ausgang geschaltet wird.

Die zusätzliche H-Brücke, im Folgenden auch "Booster" genannt, ist z.B. bis ca. 25% des Nennstromes, was ungefähr 50% der Propellerdrehzahl entspricht, abgeschaltet. Damit ist es möglich, im Teillastbereich des Motors, die Vorteile der über stromkompensierte Drosseln verschalteten Wechselrichter zu nutzen. Steigt der Ausgangsstrom über 25% des Nennstromes, werden die parallelgeschalteten Wechselrichter über die Wechselrichter- Steuerbefehle ab- und der Booster eingeschaltet.

Da im hohen Leistungsbereich des Motors ggf. keine Anforderungen an Geräuschemissionen gelten, spielen hier die durch die Taktfrequenz erzeugten Rippelströme eine untergeordnete Rolle. Dies ermöglicht es, nur eine minimal notwendige Anzahl von Halbleitern einzusetzen und die Drosseln zur Parallelschaltung der Wechselrichter wegzulassen. Bedingt durch den Wegfall eben dieser verlustbehafteten Bauteile können, bis hin zum Nennstrom, weiterhin hohe Wirkungsgrade erreicht werden. Unterschreitet der Nennstrom die 25% Grenze, wird der Booster ab- und die Parallelschaltung der Wechselrichter wieder eingeschaltet.

Mit dieser Kombination aus zwei Wechselrichterteilen (Parallelschaltung und Booster) ist es möglich, die im unteren Drehzahlbereich geltenden strengen Anforderungen zur Vermeidung von Geräuschen einzuhalten, ohne dabei die sich negativ auf den Wirkungsgrad auswirkenden Eigenschaften im hohen Drehzahlbereich in Kauf nehmen zu müssen. Es besteht für den im unteren Drehzahlbereich aktiven Wechselrichterteil die Möglichkeit, eine vom Wirkungsgrad und Geräuschemission abhängigen Kaskadierung über die Anzahl parallelgeschalteter H-Brücken, vorzunehmen.

Ferner ist es mit dieser Schaltung möglich, die Strangzahl des Motors über den gesamten Drehzahlbereich konstant zu halten. Eine Unterteilung in 6- und 12-strängigem Betrieb ist nicht mehr notwendig, um den Wirkungsgrad im Teillastbereich ausreichend groß zu halten. Das Umschalten in den Boosterbetrieb, kann bedingt durch den Einsatz von Halbleitern, anstelle mit Schützen, wie bei der äquivalenten Strangumschaltung des alten Wechselrichterkonzepts, stoßfrei erfolgen. Durch den Wegfall der Umschaltschütze ist es ferner möglich, die Wechselrichter noch kompakter aufzubauen. Die bei einer Strangumschaltung notwendigen Drosseln zur Reduzierung des Rippelstromes im 6-strängigen Betrieb können ebenfalls wegfallen.

## Patentansprüche

1. Antriebseinrichtung (1) mit einer ersten Halbbrücke (11) mit einem ersten Phasenanschluss (21), einer zweiten Halbbrücke (12) mit einem zweiten Phasenanschluss (22), einer dritten Halbbrücke (13) mit einem dritten Phasenanschluss (23) und einer vierten Halbbrücke (14) mit einem vierten Phasenanschluss (24), wobei der erste Phasenanschluss (21) mit dem zweiten Phasenanschluss (22) über eine erste stromkompensierte Drossel (31) verbunden ist, welche einen ersten motorwicklungsseitigen Anschluss (41) aufweist, wobei der dritte Phasenanschluss (23) mit dem vierten Phasenanschluss (24) über eine zweite stromkompensierte Drossel (32) verbunden ist, welche einen zweiten motorwicklungsseitigen Anschluss (42) aufweist, mit einer ersten Motorwicklung (50), wobei die erste Motorwicklung (50) ein erstes Motorwicklungsende (51) aufweist und ein zweites Motorwicklungsende (52) aufweist, **dadurch gekennzeichnet, dass** der erste motorwicklungsseitige Anschluss (41) mit dem ersten Motorwicklungsende (51) verbunden ist und der zweite motorwicklungsseitigen Anschluss (42) mit dem zweiten Motorwicklungsende (52) verbunden ist, wobei eine achte Halbbrücke (81) für eine direkte Verbindung mit dem ersten Motorwicklungsende (51) der ersten Motorwicklung (50) und eine neunte Halbbrücke (82) für eine direkte Verbindung mit dem zweiten Motorwicklungsende (52) der ersten Motorwicklung (50) vorgesehen ist.

2. Antriebseinrichtung (1) nach Anspruch 1, mit einer fünften Halbbrücke (15) mit einem fünften Phasenanschluss (25), einer sechsten Halbbrücke (16) mit einem sechsten Phasenanschluss (26), einer siebten Halbbrücke (17) mit einem siebten Phasenanschluss (27) und einer achten Halbbrücke (18) mit einem achten Phasenanschluss (28), wobei der fünfte Phasenanschluss (25) mit dem sechsten Phasenanschluss (26) über eine dritte stromkompensierte Drossel (33) verbunden ist, welche einen dritten motorwicklungsseitigen Anschluss (43) aufweist, wobei der siebte Phasenanschluss (27) mit dem achten Phasenanschluss (28) über eine vierte stromkompensierte Drossel (34) verbunden ist, welche einen vierten motorwicklungsseitigen Anschluss (44) aufweist.

3. Antriebseinrichtung (1) nach Anspruch 2, wobei eine fünfte stromkompensierte Drossel (35) einen fünften motorwicklungsseitigen Anschluss (45) aufweist, wobei eine sechste stromkompensierte Drossel (36) einen sechsten motorwicklungsseitigen Anschluss (46) aufweist, wobei der erste motorwicklungsseitige Anschluss (41) und der dritte motorwicklungsseitige Anschluss (43) mit der fünften stromkompensierten Drossel (35) stromrichterseitig verbunden ist, wobei der zweite motorwicklungsseitige Anschluss (42) und der vierte motorwicklungsseitige Anschluss (44) mit der sechsten stromkompensierten Drossel (36) stromrichterseitig verbunden ist.

4. Antriebseinrichtung (1) nach Anspruch 3, mit einer ersten Motorwicklung (50), wobei der fünfte motorwick-lungsseitige Anschluss (45) mit dem ersten Motorwicklungsende (51) verbunden ist und der sechste motorwicklungsseitigen Anschluss (46) mit dem zweiten Motorwicklungsende (52) verbunden ist.

5. Antriebseinrichtung (1) nach einem der Ansprüche 1 bis 4, wobei ein Motor (59) eine Vielzahl von Motorwicklungen (50, 51,52) aufweist, wobei eine Vielzahl von Motorwicklungen (50,51,52) jeweils über zumindest eine stromkompensierte Drossel (31,32,33,34,35,36) mit Halbbrücken (11,12,13,14,15, 16,17,18), insbesondere H-Brücken (86,87,88,89), verbunden ist, wobei diese jeweilige Motorwicklung (50,51,52) auch mit einer achten und neunte Halbbrücke (81,82) verbunden ist, wobei die achte und neunte Halbbrücke (81,82) drosselfrei direkt mit dieser jeweiligen Motorwicklung (50,51,52) verbunden ist.

6. Antriebseinrichtung (1) nach einem der Ansprüche 1 bis 5, wobei zwei Halbbrücken (11,12) ein Wechselrichtermodul (86) ausbilden.

7. Verfahren zum Betrieb einer Antriebseinrichtung (1) nach einem der Ansprüche 1 bis 6, welche eine Vielzahl von Wechselrichtermodulen (60,61,62) aufweist, wobei eine Vielzahl der Wechselrichtermodule (60, 61,62) jeweils eine Vielzahl von Halbbrücken (11,12,13,14,15, 16,17,18) aufweist, wobei die Halbbrücken (11,12,13,14,15, 16,17,18) innerhalb einer Halbwelle versetzt angesteuert werden, wobei für einen ersten Leistungsbereich einer elektrischen Maschine (59) mit Motorwicklungen (50,51,52) Halbbrücken (11,12,13,14,15,16,17,18) aktiv sind, welche über eine stromkompensierte Drossel (31,32,33, 34,35,36) mit der elektrischen Maschine (59) verbunden sind und in einem zweiten Leistungsbereiche, welcher größer ist als der erste Leistungsbereich, Halbbrücken (81,82) aktiv sind, welche drosselfrei mit der elektrischen Maschine (59) verbunden sind.

## Claims

1. Drive device (1) having a first half-bridge (11) with a first phase connection (21), a second half-bridge (12) with a second phase connection (22), a third half-bridge (13) with a third phase connection (23) and a fourth half-bridge (14) with a fourth phase connection (24), wherein the first phase connection (21) is connected to the second phase connection (22) via a first current-compensated inductor (31) which has a first motor-winding-side connection (41), wherein the third phase connection (23) is connected to the fourth phase connection (24) via a second current-compensated inductor (32) which has a second motor-winding-side connection (42), having a first motor winding (50), wherein the first motor winding (50) has a first motor winding end (51) and a second motor winding end (52),
**characterized in that** the first motor-winding-side connection (41) is connected to the first motor winding end (51), and the second motor-winding-side connection (42) is connected to the second motor winding end (52), wherein an eighth half-bridge (81) is provided for direct connection to the first motor winding end (51) of the first motor winding (50), and a ninth half-bridge (82) is provided for direct connection to the second motor winding end (52) of the first motor winding (50).

2. Drive device (1) according to Claim 1, having a fifth half-bridge (15) with a fifth phase connection (25), a sixth half-bridge (16) with a sixth phase connection (26), a seventh half-bridge (17) with a seventh phase connection (27) and an eighth half-bridge (18) with an eighth phase connection (28), wherein the fifth phase connection (25) is connected to the sixth phase connection (26) via a third current-compensated inductor (33) which has a third motor-winding-side connection (43), wherein the seventh phase connection (27) is connected to the eighth phase connection (28) via a fourth current-compensated inductor (34) which has a fourth motor-winding-side connection (44).

3. Drive device (1) according to Claim 2, wherein a fifth current-compensated inductor (35) has a fifth motor-winding-side connection (45), wherein a sixth current-compensated inductor (36) has a sixth motor-winding-side connection (46), wherein the first motor-winding-side connection (41) and the third motor-winding-side connection (43) are connected to the fifth current-compensated inductor (35) on the power converter side, wherein the second motor-winding-side connection (42) and the fourth motor-winding-side connection (44) are connected to the sixth current-compensated inductor (36) on the power converter side.

4. Drive device (1) according to Claim 3, having a first motor winding (50), wherein the fifth motor-winding-side connection (45) is connected to the first motor winding end (51), and the sixth motor-winding-side connection (46) is connected to the second motor winding end (52).

5. Drive device (1) according to one of Claims 1 to 4, wherein a motor (59) has a multiplicity of motor windings (50, 51, 52), wherein a multiplicity of motor windings (50, 51, 52) are connected to half-bridges (11, 12, 13, 14, 15, 16, 17, 18), in particular H-bridges (86, 87, 88, 89), each via at least one current-compensated inductor (31, 32, 33, 34, 35, 36), wherein this respective motor winding (50, 51, 52) is also connected to an eighth and ninth half-bridge (81, 82), wherein the eighth and ninth half-bridges (81, 82) are connected to this respective motor winding (50, 51, 52) directly without an inductor.

6. Drive device (1) according to one of Claims 1 to 5, wherein two half-bridges (11, 12) form an inverter module (86) .

7. Method for operating a drive device (1) according to one of Claims 1 to 6, which has a multiplicity of inverter modules (60, 61, 62), wherein a multiplicity of the inverter modules (60, 61, 62) respectively have a multiplicity of half-bridges (11, 12, 13, 14, 15, 16, 17, 18), wherein the half-bridges (11, 12, 13, 14, 15, 16, 17, 18) are actuated in an offset fashion within one half wave, wherein, for a first power range of an electric machine (59) with motor windings (50, 51, 52), half-bridges (11, 12, 13, 14, 15, 16, 17, 18) which are connected to the electric machine (59) via a current-compensated inductor (31, 32, 33, 34, 35, 36) are active and, in a second power range, which is larger than the first power range, half-bridges (81, 82) which are connected to the electric machine (59) without an inductor are active.

## Revendications

1. Dispositif (1) d'entraînement comprenant un premier demi-pont (11) ayant une première borne (21) de phase, un deuxième demi-pont (12) ayant une deuxième borne (22) de phase, un troisième demi-pont (13) ayant une troisième borne (23) de phase et un quatrième demi-pont (14) ayant une quatrième borne (24) de phase, dans lequel la première borne (21) de phase est reliée à la deuxième borne (22) de phase par une première bobine de self (31) à compensation du courant, qui a une première borne (41) du côté de l'enroulement d'un moteur, dans lequel la troisième borne (23) de phase est reliée à la quatrième borne (24) de phase par une deuxième bobine de self (32) à compensation du courant, qui a une deuxième borne (42) du côté de l'enroulement du moteur, comprenant un premier enroulement (50) du moteur, dans lequel le premier enroulement (50) du moteur a une première extrémité (51) d'enroulement de moteur et une deuxième extrémité (52) d'enroulement de moteur,
**caractérisé en ce que** la première borne (41) du côté de l'enroulement du moteur est reliée à la première extrémité (51) d'enroulement du moteur et la deuxième borne (42) du côté de l'enroulement du moteur est reliée à la deuxième extrémité (52) d'enroulement du moteur, dans lequel il est prévu un huitième demi-pont (81) pour une liaison directe avec la première extrémité (51) d'enroulement de moteur du premier enroulement (50) du moteur et un neuvième demi-pont (82) pour une liaison directe avec al deuxième extrémité (52) d'enroulement de moteur du premier enroulement (50) du moteur.

2. Dispositif (1) d'entraînement suivant la revendication 1, comprenant un cinquième demi-pont (15) ayant une cinquième borne (25) de phase, un sixième demi-pont (16) ayant une sixième borne (26) de phase, un septième demi-pont (17) ayant une septième borne (27) de phase et un huitième demi-pont (18) ayant une huitième borne (28) de phase, dans lequel la cinquième borne (25) de phase est reliée à la sixième borne (26) de phase par une troisième bobine de self (33) à compensation du courant, qui a une troisième borne (43) du côté de l'enroulement du moteur, dans lequel la septième borne (27) de phase est reliée à la huitième borne (28) de phase par une quatrième bobine de self (34) à compensation du courant, qui a une quatrième borne (44) du côté de l'enroulement du moteur.

3. Dispositif (1) d'entraînement suivant la revendication 2, dans lequel une cinquième bobine de self (35) à compensation du courant a une cinquième borne (45) du côté de l'enroulement du moteur, dans lequel une sixième bobine de self (36) à compensation du courant a une sixième borne (46) du côté de l'enroulement du moteur, dans lequel la première borne (41) du côté de l'enroulement du moteur et la troisième borne (43) du côté de l'enroulement du moteur est reliée du côté du convertisseur à la cinquième bobine de self (35) à compensation du courant, dans lequel la deuxième borne (42) du côté de l'enroulement du moteur et la quatrième borne (44) du côté de l'enroulement du moteur sont reliées du côté du convertisseur à la sixième bobine de self (36) à compensation du courant.

4. Dispositif (1) d'entraînement suivant la revendication 3, comprenant un premier enroulement (50) de moteur,
dans lequel la cinquième borne (45) du côté de l'enroulement du moteur est reliée à la première extrémité (51) de l'enroulement du moteur et la sixième borne (46) du côté de l'enroulement du moteur est reliée à la deuxième extrémité (52) du côté de l'enroulement du moteur.

5. Dispositif (1) d'entraînement suivant l'une des revendications 1 à 4, dans lequel un moteur (59) a une pluralité d'enroulements (50, 51, 52) du moteur, dans lequel une pluralité d'enroulements (50, 51, 52) du moteur est reliée respectivement par au moins une bobine de self (31, 32, 33, 34, 35, 36) à compensation du courant à des demi-ponts (11, 12, 13, 14, 15, 16, 17, 18), en particulier à des ponts (86, 87, 88, 89) en H, dans lequel cet enroulement (50, 51, 52) respectif du moteur est relié également à un huitième et un neuvième demi-pont (81, 82), dans lequel le huitième et le neuvième demi-pont (81, 82) sont reliés sans bobine de self directement à cet enroulement (50, 51, 52) respectif du moteur.

6. Dispositif (1) d'entraînement suivant l'une des revendications 1 à 5, dans lequel deux demi-ponts (11, 12) forment un module (86) d'onduleur.

7. Procédé pour faire fonctionner un dispositif (1) d'entraînement suivant l'une des revendications 1 à 6, qui a une pluralité de modules (60, 61, 62) d'onduleur, dans lequel une pluralité des modules (60, 61, 62) d'onduleur a respectivement une pluralité de demi-ponts (11, 12, 13, 14, 15, 16, 17, 18), dans lequel on commande, de manière décalée dans une demi-onde, les demi-ponts (11, 12, 13, 14, 15, 16, 17, 18), dans lequel, dans un premier domaine de puissance d'une machine (59) électrique ayant des enroulements (50, 51, 52) de moteur sont actifs des demi-ponts (11, 12, 13, 14, 15, 16, 17, 18), qui sont reliés à la machine (59) électrique par une bobine de self (31, 32, 33, 34, 35, 36) à compensation du courant et, dans un deuxième domaine de puissance, qui est plus grand que le premier domaine de puissance, sont actifs des demi-ponts (81, 82), qui sont reliés sans bobine de self à la machine (59) électrique.
